# EUROPEAN PATENT SPECIFICATION

(11) **EP 3 508 736 B1**
(45) Date of publication and mention of the grant of the patent: **17.11.2021**
(21) Application number: 17846576.1
(22) Date of filing: 30.08.2017
(51) Int. Cl.: F15B 15/10

(54) **HYDRAULIC ACTUATOR**
HYDRAULIKAKTUATOR
ACTIONNEUR HYDRAULIQUE

(30) Priority: 02.09.2016 JP 2016172186
(43) Date of publication of application: 10.07.2019
(73) Proprietor: Bridgestone Corporation, Tokyo 104-8340 (JP)
(72) Inventor: OONO, Shingo, Tokyo 104-8340 (JP); TARUTANI, Yasunori, Tokyo 104-8340 (JP)
(74) Representative: Oxley, Robin John George
(86) International application number: PCT/JP2017/031187
(87) International publication number: WO 2018/043572

(56) References cited:
- EP-A1- 0 162 539
- EP-A1- 3 324 054
- CN-A- 103 395 072
- JP-A- S61 157 803
- JP-A- S61 157 804
- JP-A- 2010 084 794
- JP-B2- H0 656 164

## Description

### [Technical Field]

The present invention relates to a hydraulic actuator that expands and contracts a tube by using gas or liquid, in particular, a so-called McKibben type hydraulic actuator.

### [Background Art]

Conventionally, in the hydraulic actuator that expands and contracts the tube as described above, a structure (so-called McKibben type structure) including a rubber tube (tubular body), which is expanded and contracted by air pressure, and a sleeve (braided reinforcing structure), which covers an outer periphery of the tube, is widely adopted (for example, Patent Literatures 1 and 2).

Both ends of an actuator main portion formed by the tube and the sleeve are crimped by a sealing member formed of metal.

The sleeve is formed as a tubular structural body in which a high tension fiber such as a polyamide fiber, or a metal cord is braided. The sleeve is formed to restrict an expansion movement of the tube within a predetermined range.

Such a hydraulic actuator is used in various fields, in particular, preferably used as an artificial muscle in nursing equipment or healthcare equipment.

### [Citation List]

### [Patent Literature]

[PTL 1] Japanese Unexamined Patent Application Publication No. S61-236905
[PTL 2] JP S61 157803 A

### [Summary of Invention]

The hydraulic actuator described above is also adopted in a robot in addition to the artificial muscle in the nursing equipment or the healthcare equipment. Such a hydraulic actuator may be actuated by means of oil pressure driving using mineral oil as fluid in order to obtain high contraction force.

In the oil pressure driving, extremely high pressure (approximately 5 MPa) is applied in the hydraulic actuator. Such high pressure might cause malfunction of the hydraulic actuator. Specifically, the actuator main portion, namely the tube and the sleeve, might drop off from the sealing member, so that the malfunction is caused.

Accordingly, an object of the present invention is, in consideration of the problem described above, to provide a hydraulic actuator capable of firmly preventing malfunction caused by dropping off of a tube and a sleeve from a sealing member in a case in which high pressure is applied such as a case in which oil pressure driving is adopted.

A hydraulic actuator (hydraulic actuator 10) according to one aspect of the present invention includes: an actuator main portion (actuator main portion 100) formed by a tube (tube 110) having a cylindrical shape that is expanded and contracted by pressure of fluid, and a sleeve (sleeve 120) formed as a structural body in which cords oriented in a predetermined direction are braided, the sleeve being formed to cover an outer periphery of the tube; and a sealing mechanism (for example, sealing mechanism 200) that seals an end portion of the actuator main portion in an axial direction (axial direction D_{AX}) of the actuator main portion.

The sealing mechanism includes a sealing member (sealing member 210) inserted into the actuator main portion, a binding member (for example, crimping ring 230) arranged on an outer periphery of the actuator main portion into which the sealing member is inserted, the binding member being formed to bind the actuator main portion, and a locking member (for example, locking ring 220) that locks the sleeve to the sealing member.

The sealing member includes a body portion (body portion 212) inserted into the tube, a head portion (head portion 211) continued to the body portion and arranged at an outer side in the axial direction with respect to the body portion, a flange portion (flange portion 214) arranged between the body portion and the head portion and protruded outward in a radial direction of the actuator main portion more than the body portion, in which the flange portion (214) has a contact surface (214a) to be contacted with an end surface (111) of the tube (110) in the axial direction, and the sleeve (120) is directly bound by the binding member (230) and the flange portion (214).

The head portion (211) has a contact surface (211b) to be contacted with an end surface (232) of the binding member (230) in the axial direction.

### [Brief Description of Drawings]

[Fig. 1] Fig. 1 is a side view of a hydraulic actuator 10.
[Fig. 2] Fig. 2 is an exploded perspective view of a part of the hydraulic actuator 10.
[Fig. 3] Fig. 3 is a perspective view of a sealing member 210.
[Fig. 4] Fig. 4 is a cross-sectional view of the sealing member 210 taken along line F4-F4 shown in Fig. 3.
[Fig. 5] Fig. 5 is a cross-sectional view along an axial direction D_{AX} of the hydraulic actuator 10 illustrating a part of the hydraulic actuator 10 including a sealing mechanism 200.
[Fig. 6] Fig. 6 is an exploded perspective view of a sealing mechanism 200A.
[Fig. 7] Fig. 7 is a cross-sectional view along an axial direction D_{AX} of the hydraulic actuator 10 illustrating a part of the hydraulic actuator 10 including the sealing mechanism 200A.
[Fig. 8] Fig. 8 is an exploded perspective view of a sealing mechanism 200B.
[Fig. 9] Fig. 9 is a perspective view of a binding clamp 230A.
[Fig. 10] Fig. 10 is a perspective view of a binding band 230B.
[Fig. 11] Fig. 11 is a cross-sectional view along an axial direction D_{AX} of the hydraulic actuator 10 illustrating a part of the hydraulic actuator 10 including a sealing mechanism 200C.

### [Description of Embodiments]

Next, embodiments will be described with reference to the drawings. Further, the same or similar reference numerals are assigned to parts having the same function or the same configuration, and therefore the description thereof is accordingly omitted.

### (1) Whole configuration of hydraulic actuator

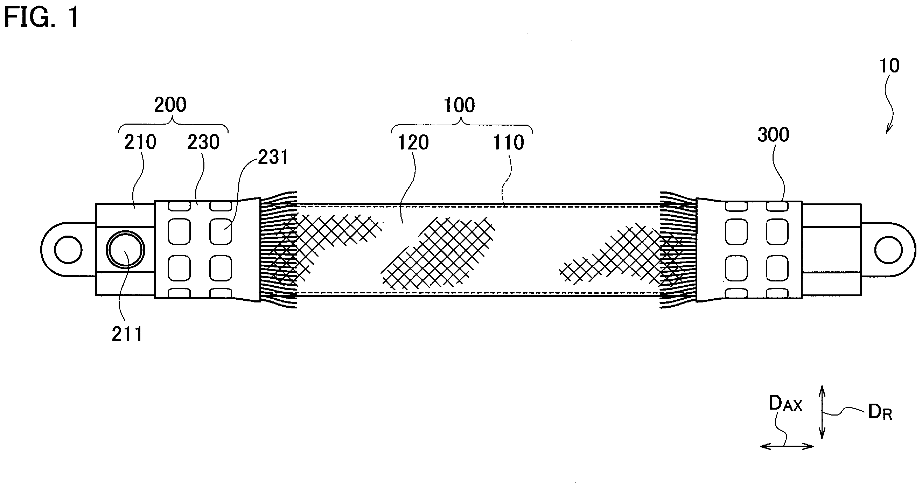

Fig. 1 is a side view of a hydraulic actuator 10 according to the present embodiment. As shown in Fig. 1, the hydraulic actuator 10 is provided with an actuator main portion 100, a sealing mechanism 200, and a sealing mechanism 300.

The sealing mechanism 200 and the sealing mechanism 300 are formed to seal both end portions of the actuator main portion 100 in an axial direction D_{AX}. Specifically, the sealing mechanism 200 includes a sealing member 210 and a crimping ring 230. The sealing member 210 is formed to seal an end portion of the actuator main portion 100 in the axial direction D_{AX}. Further, the crimping ring 230 is formed to crimp the actuator main portion 100 in conjunction with the sealing member 210. A pressed mark 231 is formed on an outer periphery of the crimping ring 230 when the crimping ring 230 is crimped by a jig.

The difference between the sealing mechanism 200 and the sealing mechanism 300 is whether a connection port 211a for fluid is formed.

The actuator main portion 100 is formed by a tube 110 and a sleeve 120. Fluid flows into the actuator main portion 100 via the connection port 211a.

When the fluid flows into the tube 110, the actuator main portion 100 is contracted in the axial direction D_{AX} of the actuator main portion 100 and is expanded in a radial direction D_{R} of the actuator main portion 100. Further, when the fluid flows out from the tube 110, the actuator main portion 100 is expanded in the axial direction D_{AX} of the actuator main portion 100 and is contracted in the radial direction D_{R} of the actuator main portion 100. With such a shape change of the actuator main portion 100, the hydraulic actuator 10 works as an actuator.

Examples of the fluid used for driving the hydraulic actuator 10 include gas such as air, liquid such as water and mineral oil. The hydraulic actuator 10 especially has high durability that can endure oil pressure driving in which high pressure is applied to the actuator main portion 100.

Further, such a hydraulic actuator 10 is formed as a so-called McKibben type actuator and is preferably applied to not only an artificial muscle but also a body limb (an upper limb, a lower limb or the like) of a robot in which higher capability (contraction force) is required.

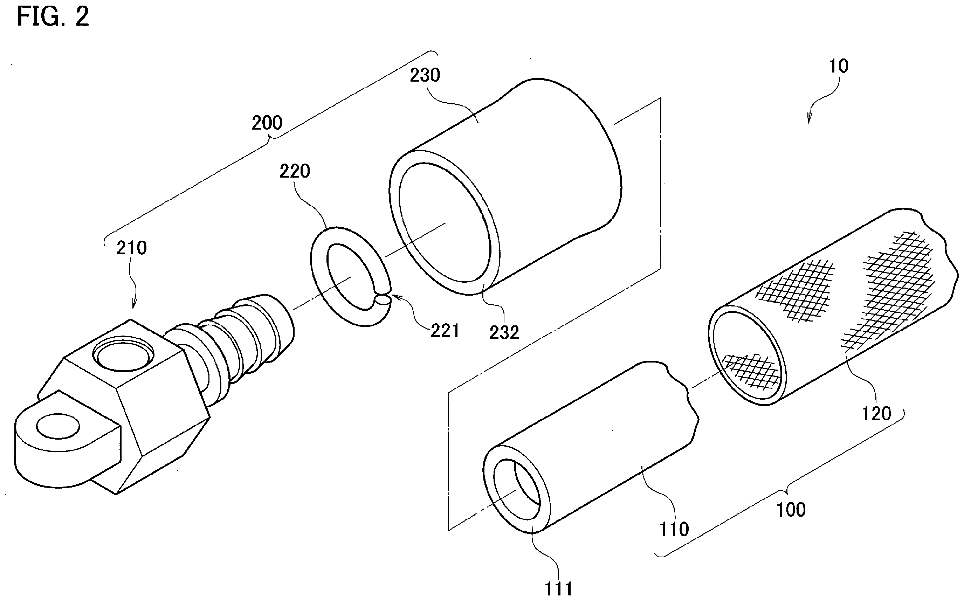

Fig. 2 is an exploded perspective view of a part of the hydraulic actuator 10. As shown in Fig. 2, the hydraulic actuator 10 is provided with the actuator main portion 100, and the sealing mechanism 200.

As described above, the actuator main portion 100 is formed by the tube 110 and the sleeve 120.

The tube 110 is formed as a tubular body having a cylindrical shape which is expanded and contracted by pressure of fluid. The tube 110 is formed of an elastic material such as butyl rubber so as to allow the repeated contraction and expansion by fluid. In the present embodiment, an inner diameter φ of the tube 110 is 9.5 mm.

In a case in which the hydraulic actuator 10 is driven by oil pressure, NBR (nitrile rubber) having high oil resistance, or one of the NBR, hydrogenated NBR, chloroprene rubber, and epichlorohydrin rubber, may be adopted as the material of the tube 110.

The sleeve 120 is formed in a cylindrical shape to cover an outer periphery of the tube 110. The sleeve 120 is formed as a structural body in which cords oriented in a predetermined direction are braided. The cords oriented in the predetermined direction are intersected to each other so that rhombus shapes are repeatedly formed. Such a shape allows the sleeve 120 to deform like a pantograph and thereby the sleeve 120 follows the deformation of the tube 110 while restricting the contraction and the expansion of the tube 110.

As the material of the cord which forms the sleeve 120, it is preferable to adopt a fiber cord formed of aromatic polyamide (aramid fiber) or polyethylene terephthalate (PET). However, the material of the cord is not limited to such kinds of the fiber cord, and for example, a metal cord formed of high strength fiber such as PBO fiber (polypara-phenylenebenzobisoxazole) or a fine filament may be adopted.

The sealing mechanism 200 is formed to seal an end portion of the actuator main portion 100 in the axial direction D_{AX}. The sealing mechanism 200 is formed by the sealing member 210, a locking ring 220, and the crimping ring 230.

Into the actuator main portion 100 is inserted the sealing member 210. As the material of the sealing member 210, a metal material such as stainless steel is preferably adopted. However, the material of the sealing member 210 is not limited to such a material, and therefore a hard plastic material may be adopted.

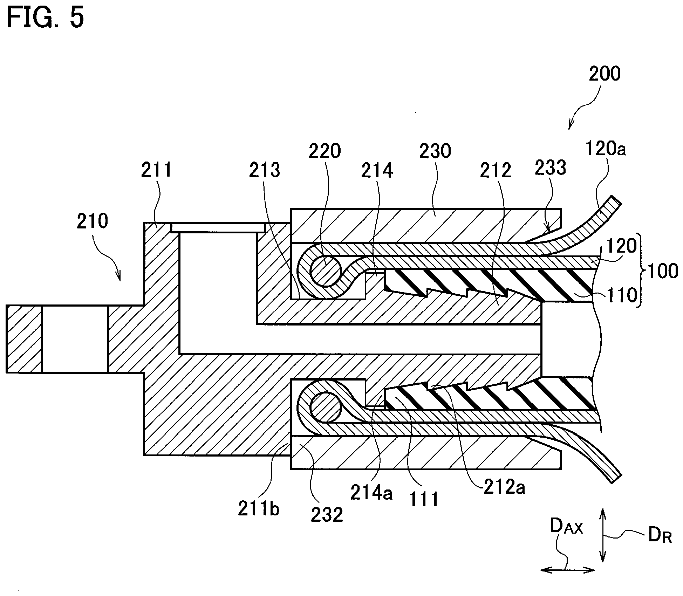

The locking ring 220 is formed to lock the sleeve 120 to the sealing member 210. In the present embodiment, the locking ring 220 forms a locking member. Specifically, the sleeve 120 is folded toward an outer side in the radial direction D_{R} via the locking ring 220 (this configuration is not shown in Fig. 2 but shown in FIG. 5).

The locking ring 220 includes a cut portion 221 formed by cutting a part of the locking ring 220 so as to allow the locking ring 220 to engage with the sealing member 210. As the material of the locking ring 220, the metal material or the hard plastic material similar to the sealing member 210 may be adopted.

The crimping ring 230 is arranged on the outer periphery of the actuator main portion 100 into which the sealing member 210 is inserted so as to bind the actuator main portion 100. In the present embodiment, the crimping ring 230 forms a binding member.

The crimping ring 230 is formed to crimp the actuator main portion 100 in conjunction with the sealing member 210. As the material of the crimping ring 230, a metal material such as aluminum alloy, brass, and iron may be adopted. The pressed mark 231 (see Fig. 1) is formed when the crimping ring 230 is crimped by a jig.

### (2) Configuration of sealing mechanism

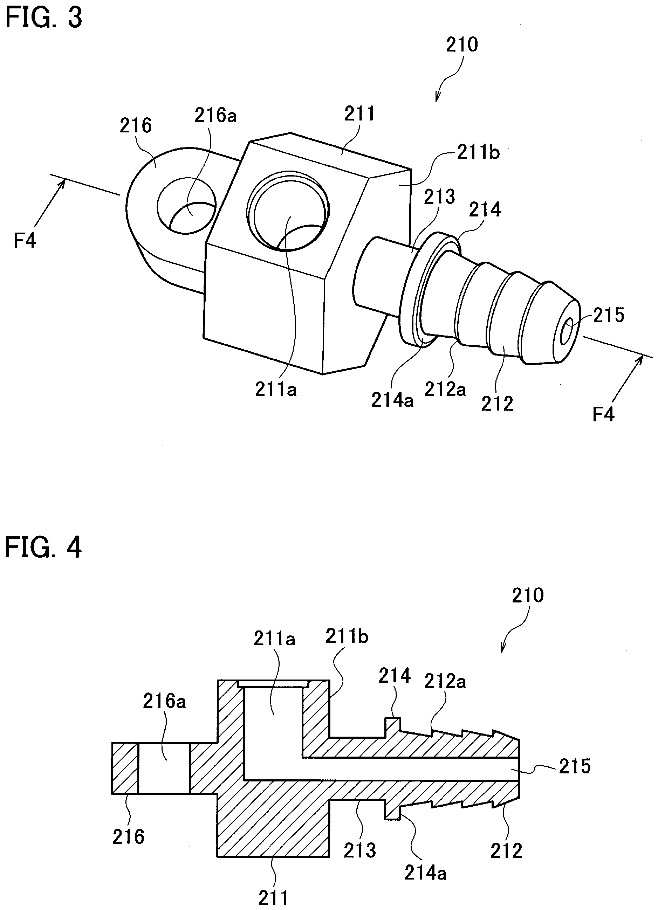

Next, a specific configuration of the sealing mechanism 200 will be described with reference to Fig. 3 to Fig. 5.

### (2. 1) Configuration of the sealing member 210

Fig. 3 is a perspective view of the sealing member 210. Fig. 4 is a cross-sectional view of the sealing member 210 taken along line F4-F4 shown in Fig. 3.

As shown in Fig. 3 and Fig. 4, the sealing member 210 has a head portion 211, a body portion 212, and a neck portion 213. Further, the sealing member 210 has a flange portion 214 and a connection portion 216.

The head portion 211 is continued to the body portion 212. The head portion 211 is arranged at an outer side in the axial direction D_{AX} (see Fig. 1) with respect to the body portion 212. The connection port 211a is formed in the head portion 211.

A driving pressure source for the hydraulic actuator 10, specifically a hose (piping) connected to a compressor for gas or liquid, is connected to the connection port 211a.

The head portion 211 has a contact surface 211b contacted with an end surface 232 (not shown in Fig. 3 and Fig. 4, and see Fig. 2 and Fig. 5) of the crimping ring 230 in the axial direction D_{AX}. The contact surface 211b is formed as a flat surface to be contacted with the end surface 232 in a surface contact manner.

The body portion 212 is a portion inserted into the tube 110 (see Fig. 1 and Fig. 2). Specifically, the body portion 212 is contacted with an inner periphery of the tube 110 into which the sealing member 210 is inserted.

The body portion 212 has a stepped portion 212a at an outer periphery thereof. The stepped portion 212a is formed to prevent the tube 110 from dropping off from the sealing member 210. The stepped portion 212a is protruded outward in the radial direction D_{R} (see Fig. 1) so as to be a resistance against the tube 110 pulled off from the body portion 212 in a pull off direction.

The neck portion 213 is arranged between the flange portion 214 and the head portion 211. A diameter of the neck portion 213 is smaller than a diameter of other part of the sealing member 210. In the present embodiment, the diameter φ of the neck portion 213 is 8 mm. Further, a size of the neck portion 213 in the radial direction D_{R} is smaller than those of the body portion 212 and the head portion 211.

The flange portion 214 is arranged between the body portion 212 and the head portion 211, namely arranged adjacent to the body portion 212 and the neck portion 213. The flange portion 214 is protruded outward in the radial direction D_{R} more than the body portion 212. More specifically, the flange portion 214 is formed in a ring shape protruded outward in the radial direction D_{R} from the outer periphery of the neck portion 213.

In the present embodiment, a diameter φ of the flange portion 214 is 13 mm. As described above, the diameter φ of the neck portion 213 is 8 mm, and therefore a step difference between the flange portion 214 and the neck portion 213 is 2.5 mm.

The flange portion 214 has a contact surface 214a contacted with an end surface 111 (not shown in Fig. 3 and Fig. 4, and see Fig. 2 and Fig. 5) of the tube 110 in the axial direction D_{AX}. The contact surface 214a is formed as a flat surface contacted with the end surface 111 in a surface contact manner.

A through hole 215 is formed along the axial direction D_{AX} in the sealing member 210. The through hole 215 is communicated with the connection port 211a. Fluid flows into the actuator main portion 100 through the through hole 215. In the present embodiment, a diameter φ of the through hole 215 is 3 mm.

Further, the connection portion 216 is formed in the sealing member 210. Specifically, the connection portion 216 is formed at an outer side in the axial direction D_{AX} with respect to the head portion 211. An engaging hole 216a that engages with a member forming a body limb of a robot is formed in the connection portion 216.

### (2. 2) Configuration of the sealing mechanism 200

Fig. 5 is a cross-sectional view along the axial direction D_{AX} of the hydraulic actuator 10 illustrating a part of the hydraulic actuator 10 including the sealing mechanism 200.

As shown in Fig. 5, into the tube 110 is inserted the body portion 212. As described above, the contact surface 214a is contacted with the end surface 111 of the tube 110. Specifically, the contact surface 214a is contacted with the end surface 111 in a surface contact manner. Further, the stepped portion 212a bites the inner periphery of the tube 110 when the actuator main portion 100 is crimped by the crimping ring 230 in conjunction with the sealing member 210, so that the dropping off of the tube 110 from the body portion 212 can be firmly prevented.

The locking ring 220 is formed on the outer periphery of the sleeve 120. The sleeve 120 is folded to a center side in the axial direction D_{AX} through the locking ring 220. Specifically, the sleeve 120 has a folded portion 120a folded through the locking ring 220. The folded portion 120a is folded to the outer side in the radial direction D_{R} through the locking ring 220 and contacted with the inner periphery of the crimping ring 230.

The crimping ring 230 fixes the actuator main portion 100 to the sealing member 210 by crimping the tube 110 and the sleeve 120 folded through the locking ring 220, in conjunction with the sealing member 210.

The crimping ring 230 has a chamfered portion 233. The chamfered portion 233 is formed on an end portion of the crimping ring 230 at the center side in the axial direction D_{AX}. The chamfered portion 233 is formed such that an inner diameter of the crimping ring 203 is spread toward the center side in the axial direction D_{AX}. The chamfered portion 233 is formed to avoid excessive contact between the end portion of the crimping ring 230 at the center side in the axial direction D_{AX} and the folded portion 120a.

Further, as described above, the contact surface 211b of the head portion 211 is contacted with the end surface 232 of the crimping ring 230. Specifically, the contact surface 211b is contacted with the end surface 232 in a surface contact manner.

### (3) Functions and effects

As described above, the locking ring 220 that locks the sleeve 120 to the sealing member 210 is formed in the hydraulic actuator 10, and the flange portion 214 protruded outward in the radial direction D_{R} is formed in the sealing member 210. Further, the actuator main portion 100 formed by the tube 110 and the sleeve 120 is bound by crimping ring 230.

Thus, the movement of the locking ring 220 toward the center side in the axial direction D_{AX} is restricted by the flange portion 214, and the movement of the sleeve 120 folded through the locking ring 220 is also restricted. As a result, the tube 110 can be firmly prevented from dropping off from the body portion 212.

Consequently, the hydraulic actuator 10 can firmly prevent of the malfunction thereof caused by the dropping off of the tube 110 and the sleeve 120 from the sealing member 210 even in a case in which high pressure is applied such as a case in which the hydraulic actuator 10 is driven by means of oil pressure.

More specifically, when the actuator main portion 100 is crimped by the crimping ring 230 in conjunction with the sealing member 210, the sleeve 120 is directly bound by the crimping ring 230 and the flange portion 214. Thus, a dropping off prevention effect of the actuator main portion 100 is largely improved compared to a configuration in which the flange portion 214 is not arranged. According to the hydraulic actuator 10 described above, it has been found that the actuator main portion 100 does not drop off even if the hydraulic actuator 10 is pulled by force of substantially 3,500 N.

In the present embodiment, the flange portion 214 is arranged between the body portion 212 and the head portion 211, specifically the flange portion 214 is arranged adjacent to the body portion 212 and the neck portion 213. Further, a size (diameter) of the neck portion 213 in the radial direction D_{R} is smaller than that of each of the body portion 212 and the head portion 211.

With this, a distinct step (2.5 mm in the present embodiment) is formed between the neck portion 213 and the flange portion 214, and therefore the movement of the locking ring 220 can be further firmly prevented by the flange portion 214 and the sleeve 120 can be further firmly bound by the crimping ring 230 and the flange portion 214. Consequently, the dropping off of the tube 110 and the sleeve 120 from the sealing member 210 can be further firmly prevented.

Here, in a case in which the diameter of the neck portion 213 is set to excessively small, the neck portion 213 is easily broken by the tension when the actuator main portion 100 is expanded. On the other hand, it is desired that the inner diameter of the through hole 215 is set to be large to some extent from a viewpoint of avoiding interruption of smooth passing of fluid. Accordingly, it is preferable that the size (φ) of each portion of the sealing member 210 is set as described in the embodiment.

In the present embodiment, the flange portion 214 is formed in a ring shape protruded outward in the radial direction D_{R} from the outer periphery of the neck portion 213. With this, the flange portion 214 is contacted with the sleeve 120 in a surface contact manner, and thereby the dropping off prevention effect of the actuator main portion 100 can be further improved

In the present embodiment, the flange portion 214 has the contact surface 214a contacted with the end surface 111 of the tube 110. Further, the head portion 211 has the contact surface 211b contacted with the end surface 232 of the crimping ring 230. With this, a sealing performance of the sealing member 210 can be improved, and the dropping off prevention effect of the actuator main portion 100 can be further improved by the fluid leaked under a high pressure environment.

In the present embodiment, the chamfered portion 233 of the crimping ring 230 is formed such that the inner diameter of the crimping ring 230 is spread toward the center side in the axial direction D_{AX}. With this, the folded portion 120a of the sleeve 120 can be prevented from being damaged, and the dropping off of the actuator main portion 100 due to the damage of the folded portion 120a can be firmly prevented.

### (4) Modified examples of sealing mechanism

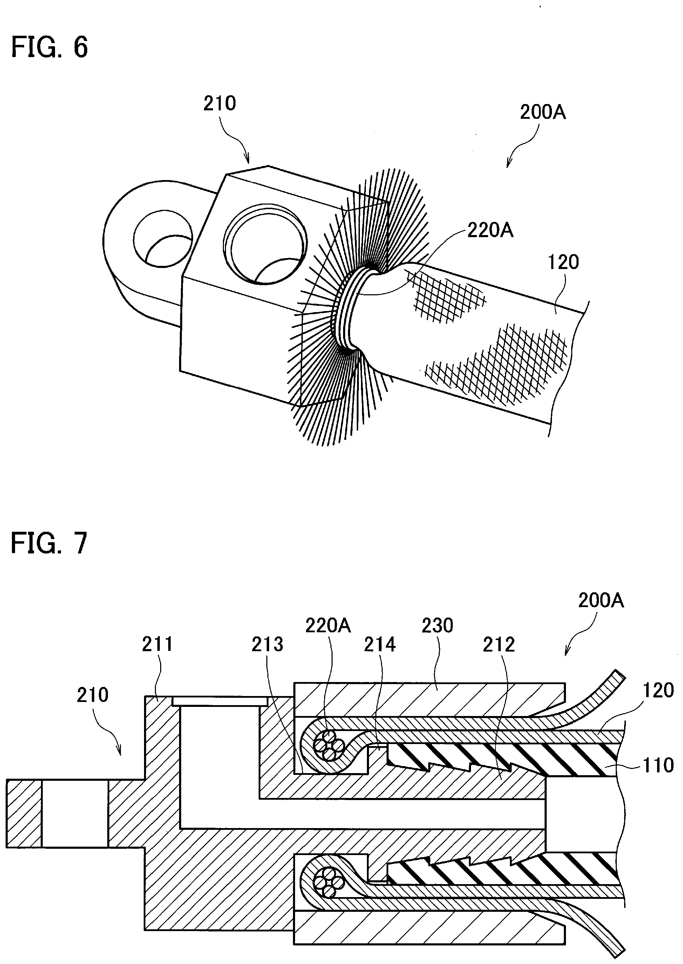

Next, modified examples of the sealing mechanism will be described with reference to Fig. 6 to Fig. 10. Hereinafter, a portion different from the sealing mechanism 200 according to the embodiment described above is mainly described, and the description of a similar portion is omitted accordingly.

### (4. 1) Modified example 1

Fig. 6 is an exploded perspective view of a sealing mechanism 200A. Fig. 7 is a cross-sectional view along the axial direction D_{AX} of the hydraulic actuator 10 illustrating a part of the hydraulic actuator 10 including the sealing mechanism 200A. In Fig. 6, a state before the crimping ring 230 is mounted and the sleeve 120 is folded is illustrated.

In the sealing mechanism 200A, a locking wire 220A is adopted instead of the locking ring 220. The locking wire 220A is formed by a wire so as to be wound on the outer peripheral of the sleeve 120 at a region corresponding to the neck portion 213 (see Fig. 3 to Fig. 5) of the sealing member 210. The locking wire 220A is one example of the modified examples of the locking member.

It is preferable that the locking wire 220A is wound at least several times on the outer periphery of the sleeve 120. Both end portions of the locking wire 220A may be bundled by twisting or alternatively may be merely wound on the neck portion 213 without being bundled.

The locking wire 220A can lock the sleeve 120 to the sealing member 210 and the dropping off prevention effect of the sleeve 120 can be further improved compared to the locking ring 220.

### (4. 2) Modified example 2

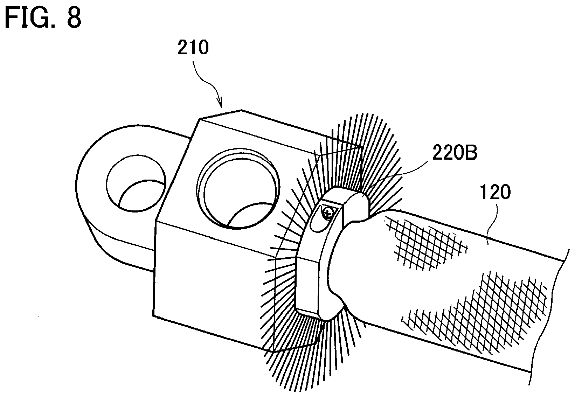

Fig. 8 is an exploded perspective view of a sealing mechanism 200B. In Fig. 8, a state before the crimping ring 230 is mounted and the sleeve 120 is folded is illustrated.

In the sealing mechanism 200B, a locking clamp 220B is adopted instead of the locking ring 220. The locking clamp 220B has a notch (not shown). The locking clamp 220B is formed to lock the sleeve 120 to the sealing member 210 by using a screw portion 222. The locking clamp 220B is one example of the modified examples of the locking member.

The locking clamp 220B can lock the sleeve 120 to the sealing member 210 further firmly compared to the locking ring 220 and the locking wire 220A.

### (4. 3) Modified example 3

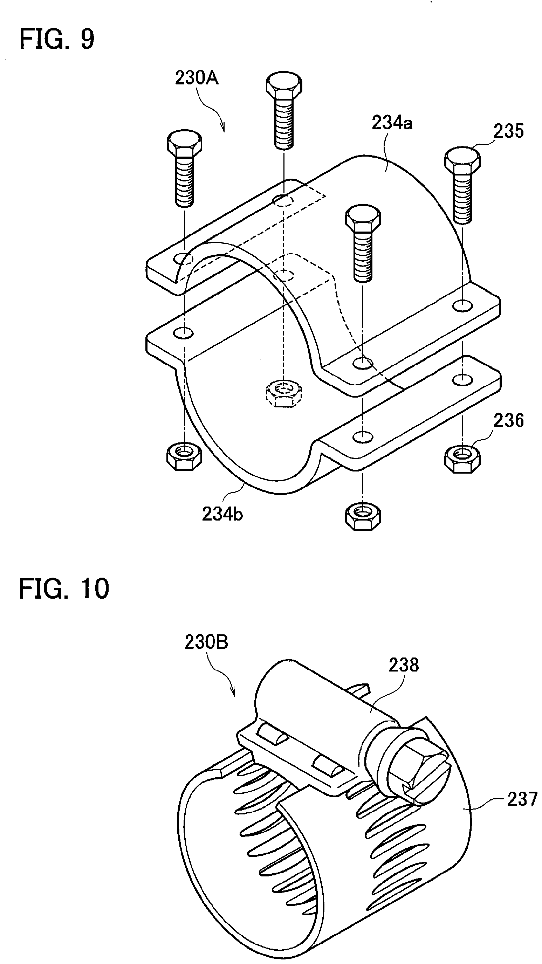

Fig. 9 is a perspective view of a binding clamp 230A. The binding clamp 230A is adopted instead of the crimping ring 230. The binding clamp 230A is one example of the modified examples of the binding member.

As shown in Fig. 9, the binding clamp 230A is formed by two pieces of a clamp body portion 234a and a clamp body portion 234b. The clamp body portion 234a and the clamp body portion 234b are connected by using bolts 235 and nuts 236 so as to bind the actuator main portion 100 (see Fig. 1, Fig. 2 or the like).

The binding clamp 230A is easily mounted and released compared to the crimping ring 230, and therefore the binding clamp 230A can facilitate improvement of maintenance of the hydraulic actuator 10.

### (4. 4) Modified example 4

Fig. 10 is a perspective view of a binding band 230B. The binding band 230B is adopted instead of the crimping ring 230. The binding band 230B is one example of the modified examples of the binding member.

As shown in Fig. 10, the binding band 230B has a band portion 237 and a screw portion 238. An inner diameter of the band portion 237 is made small by using the screw portion 238 so as to bind the actuator main portion 100 (see Fig. 1, Fig. 2 or the like).

The binding band 230B is also easily mounted and released compared to the crimping ring 230, and therefore the binding band 230B can facilitate the improvement of the maintenance of the hydraulic actuator 10.

### (4. 5) Modified example 5

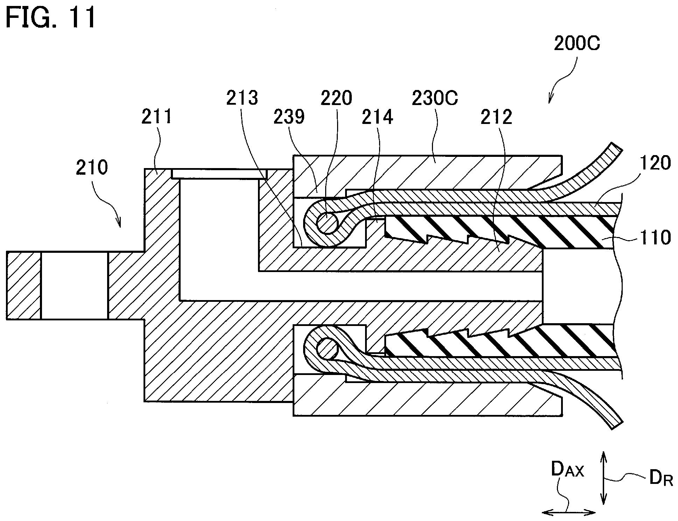

Fig. 11 is a cross-sectional view along the axial direction D_{AX} of the hydraulic actuator 10 illustrating a part of the hydraulic actuator 10 including a sealing mechanism 200C. As shown in Fig. 11, in the sealing mechanism 200C, a crimping ring 230C is adopted.

The crimping ring 230C has a protrusion portion 239 protruded toward an inner side in the radial direction D_{R} at a side of the head portion 211 of the sealing member 210, namely at an end portion at the outer side in the axial direction D_{AX}, compared to the crimping ring 230 (see Fig. 5).

According to the crimping ring 230C, the movement of the locking ring 220 can be further firmly restricted by the protrusion portion 239, and thereby the dropping off prevention effect of the actuator main portion 100 can be further improved.

### (5) Other embodiments

As described above, the content of the present invention was described through the embodiment. However, the present invention is not limited to the embodiment and therefore it is obvious for a person skilled in the art that various modifications and improvements can be adopted.

For example, in the embodiment described above, the sealing member 210 has the neck portion 213 smaller than other part. However, such a neck portion 213 is not necessarily formed. That is, a neck portion having substantially the same size as that of the body portion 212 may be arranged between the head portion 211 and the flange portion 214 of the sealing member 210.

Further, the contact surface 214a of the flange portion 214 may not be formed in a flat surface that can be contacted with the end surface 111 of the tube 110 in a surface contact manner. Similarly, the contact surface 211b of the head portion 211 may not be formed in a flat surface that can be contacted with the end surface 232 of the crimping ring 230. Further, the chamfered portion 233 of the crimping ring 230 is not necessarily formed.

In the embodiment described above, the flange portion 214 is formed in a ring shape. However, the flange portion 214 is not necessarily formed in a ring shape, and therefore the flange portion 214 may be formed in a polygonal shape (for example, an octagonal shape).

Further, the connection portion 216 of the sealing member 210 may not be formed. That is, the connection portion 216 may be or may not be formed so as to correspond to a usage of the hydraulic actuator 10. Further, a screw portion may be formed in the connection portion 216 so that the connection portion 216 is detachable to the head portion 211.

In the embodiment described above, the sleeve 120 is folded through the locking ring 220. However, the sleeve 120 is not necessarily folded to the center side in the axial direction D_{AX}.

As described above, although the embodiments of the present invention were described, the descriptions and drawings that form a part of this disclosure are not to be considered as limitation to the present invention. From this disclosure, a variety of alternate embodiments, examples, and applicable techniques will become apparent to a person skilled in the art.

The entire contents of Japanese Patent Application No. 2016-172186 (filed on September 2, 2016) are incorporated herein by reference.

### [Industrial Applicability]

The hydraulic actuator according to one aspect of the present invention can firmly prevent the malfunction caused by the dropping off of the tube and the sleeve from the sealing member in a case in which high pressure is applied such as a case in which the oil pressure driving is adopted.

### [Reference Signs List]

10: hydraulic actuator
100: actuator main portion
110: tube
111: end surface
120: sleeve
120a: folded portion
200, 200A, 200B: sealing mechanism
210: sealing member
211: head portion
211a: connection port
211b: contact surface
212: body portion
212a: stepped portion
213: neck portion
214: flange portion
214a: contact surface
215: through hole
216: connection portion
216a: engaging hole
220: locking ring
220A: locking wire
220B: locking clamp
221: cut portion
230, 230C: crimping ring
230A: binding clamp
230B: binding band
231: pressed mark
232: end surface
233: chamfered portion
234a, 234b: clamp body portion
235: bolt
236: nut
237: band portion
238: screw portion
239: protrusion portion
300: sealing mechanism

## Claims

1. A hydraulic actuator (10) comprising:
an actuator main portion (100) formed by a tube (110) having a cylindrical shape that is expanded and contracted by pressure of fluid, and a sleeve (120) formed as a structural body in which cords oriented in a predetermined direction are braided, the sleeve (120) being configured to cover an outer periphery of the tube (110); and
a sealing mechanism (200) that seals an end portion of the actuator main portion (100) in an axial direction of the actuator main portion (100),
wherein:
the sealing mechanism (200) comprises:
a sealing member (210) inserted into the actuator main portion (100);
a binding member (230) arranged on an outer periphery of the actuator main portion (100) into which the sealing member (210) is inserted, the binding member (230) being configured to bind the actuator main portion (100); and
a locking member (220) that locks the sleeve (120) to the sealing member (210), and
the sealing member (210) comprises:
a body portion (212) inserted into the tube (110);
a head portion (211) continued to the body portion (212) and arranged at an outer side in the axial direction with respect to the body portion (212);
a flange portion (214) arranged between the body portion (212) and the head portion (211) and protruded outward in a radial direction of the actuator main portion (100) more than the body portion (212),
the flange portion (214) has a contact surface (214a) to be contacted with an end surface (111) of the tube (110) in the axial direction, and
the sleeve (120) is directly bound by the binding member (230) and the flange portion (214),
**characterised in that** the head portion (211) has a contact surface (211b) to be contacted with an end surface (232) of the binding member (230) in the axial direction.

2. The hydraulic actuator (10) according to claim 1, wherein the sealing member (210) comprises a neck portion (213) arranged between the flange portion (214) and the head portion (211), and a size of the neck portion (213) in the radial direction is smaller than a size of each of the body portion (212) and the head portion (211).

3. The hydraulic actuator (10) according to claim 2, wherein the flange portion (214) is formed in a ring shape protruded outward in the radial direction from an outer periphery of the neck portion (213).

4. The hydraulic actuator (10) according to any one of claims 1 to 3, wherein:
the binding member (230) has a chamfered portion (233) formed on an end portion of the binding member (230) at a center side in the axial direction;
the chamfered portion (233) is formed such that an inner diameter of the binding member (230) is spread toward the center side in the axial direction; and
the sleeve (120) is folded toward the center side in the axial direction through the locking member (220).

## Patentansprüche

1. Hydraulischer Aktor (10), der Folgendes umfasst:
einen Aktor-Hauptabschnitt (100), der durch eine Röhre (110), die eine zylindrische Form aufweist, die durch Fluiddruck ausgedehnt und zusammengezogen wird, und eine Hülse (120), die als ein struktureller Körper geformt ist, in dem Kords, die in einer vorbestimmten Richtung ausgerichtet sind, verflochten sind, wobei die Hülse (120) konfiguriert ist, um einen äußeren Umfang der Röhre (110) zu bedecken, und
einen Abdichtungsmechanismus (200), der einen Endabschnitt des Aktor-Hauptabschnitts (100) in einer axialen Richtung des Aktor-Hauptabschnitts (100) abdichtet,
wobei:
der Abdichtungsmechanismus (200) Folgendes umfasst:
ein Abdichtungselement (210), das in den Aktor-Hauptabschnitt (100) eingesetzt ist,
ein Bindeelement (230), das an einem äußeren Umfang des Aktor-Hauptabschnitts (100) angeordnet ist, worin das Abdichtungselement (210) eingesetzt ist, wobei das Bindeelement (230) dafür konfiguriert ist, den Aktor-Hauptabschnitt (100) zu binden, und
ein Arretierungselement (220), das die Hülse (120) an dem Abdichtungselement (210) arretiert, und
wobei das Abdichtungselement (210) Folgendes umfasst:
einen Körperabschnitt (212), der in die Röhre (110) eingesetzt ist,
einen Kopfabschnitt (211), der sich an den Körperabschnitt (212) anschließt und an einer in der axialen Richtung äußeren Seite in Bezug auf den Körperabschnitt (212) angeordnet ist,
einen Flanschabschnitt (214), der zwischen dem Körperabschnitt (212) und dem Kopfabschnitt (211) angeordnet ist und in einer radialen Richtung des Aktor-Hauptabschnitts (100) mehr nach außen vorspringt als der Körperabschnitt (212),
wobei der Flanschabschnitt (214) eine Kontaktfläche (214a) aufweist, die mit einer Endfläche (111) der Röhre (110) in der axialen Richtung in Kontakt zu bringen ist, und
die Hülse (120) durch das Bindeelement (230) und den Flanschabschnitt (214) unmittelbar gebunden ist,
**dadurch gekennzeichnet, dass** der Kopfabschnitt (211) eine Kontaktfläche (211b) aufweist, die mit einer Endfläche (232) des Bindeelements (230) in der axialen Richtung in Kontakt zu bringen ist.

2. Hydraulischer Aktor (10) nach Anspruch 1, wobei das Abdichtungselement (210) einen Halsabschnitt (213) umfasst, der zwischen dem Flanschabschnitt (214) und dem Kopfabschnitt (211) angeordnet ist, und eine Größe des Halsabschnitts (213) in der radialen Richtung kleiner ist als eine Größe sowohl des Körperabschnitts (212) als auch des Kopfabschnitts (211).

3. Hydraulischer Aktor (10) nach Anspruch 2, wobei der Flanschabschnitt (214) in einer Ringgestalt geformt ist, die in der radialen Richtung von einem äußeren Umfang des Halsabschnitts (213) nach außen vorspringt.

4. Hydraulischer Aktor (10) nach einem der Ansprüche 1 bis 3, wobei:
das Bindeelement (230) einen abgeschrägten Abschnitt (233) aufweist, der an einem Endabschnitt des Bindeelements (230) an einer in der axialen Richtung mittigen Seite geformt ist,
der abgeschrägte Abschnitt (233) derart geformt ist, dass ein Innendurchmesser des Bindeelements (230) zu der in der axialen Richtung mittigen Seite hin gespreizt ist, und
die Hülse (120) durch das Arretierungselement (220) hin zu der in der axialen Richtung mittigen Seite gefaltet ist.

## Revendications

1. Actionneur hydraulique (10), comprenant :
une partie principale d'actionneur (100) formée par un tube (110) ayant une forme cylindrique qui se dilate et se contracte par la pression d'un fluide, et un manchon (120) ayant la forme d'un corps structurel dans lequel des câbles, orientés dans une direction prédéterminée, sont tressés, le manchon (120) étant configuré pour recouvrir une périphérie externe du tube (110) ; et
un mécanisme d'étanchéité (200) qui établit l'étanchéité d'une partie d'extrémité de la partie principale de l'actionneur (100) dans une direction axiale de la partie principale de l'actionneur (100) ;
dans lequel :
le mécanisme d'étanchéité (200) comprend :
un élément d'étanchéité (210) inséré dans la partie principale de l'actionneur (100) ;
un élément de liaison (230) agencé sur une périphérie externe de la partie principale de l'actionneur (100) dans laquelle l'élément d'étanchéité (210) est inséré, l'élément de liaison (230) étant configuré pour lier la partie principale de l'actionneur (100) ; et
un élément de verrouillage (220) qui verrouille le manchon (120) sur l'élément d'étanchéité (210) ; et
l'élément d'étanchéité (210) comprend :
une partie de corps (212) insérée dans le tube (110) ;
une partie de tête (211) continuant jusqu'à la partie de corps (212) et agencée sur un côté externe, dans la direction axiale par rapport à la partie de corps (212) ;
une partie de bride (214) agencée entre la partie de corps (212) et la partie de tête (211) et faisant saillie vers l'extérieur dans une direction radiale de la partie principale de l'actionneur (100), davantage que la partie de corps (212) ;
la partie de bride (214) comporte une surface de contact (214a) destinée à être mise en contact avec une surface d'extrémité (111) du tube (110) dans la direction axiale ; et
le manchon (120) est directement lié par l'élément de liaison (230) et la partie de bride (214) ;
**caractérisé en ce que** la partie de tête (211) comporte une surface de contact (211B) destinée être mise en contact avec une surface d'extrémité (232) de l'élément de liaison (230) dans la direction axiale.

2. Actionneur hydraulique (10) selon la revendication 1, dans lequel l'élément d'étanchéité (210) comprend une partie de col (213) agencée entre la partie de bride (214) et la partie de tête (211), et une dimension de la partie de col (213) dans la direction radiale est inférieure à une dimension de chacune de la partie de corps (212) et de la partie de tête (211).

3. Actionneur hydraulique (10) selon la revendication 2, dans lequel la partie de bride (214) est formée en une forme annulaire faisant saillie vers l'extérieur dans la direction radiale à partir d'une périphérie externe de la partie de col (213).

4. Actionneur hydraulique (10) selon l'une quelconque des revendications 1 à 3, dans lequel :
l'élément de liaison (230) comporte une partie chanfreinée (233) formée sur une partie d'extrémité de l'élément de liaison (230), au niveau d'un côté central dans la direction axiale ;
la partie chanfreinée (233) est formée de sorte qu'un diamètre intérieur de l'élément de liaison (230) s'étend vers le côté central dans la direction axiale ; et
le manchon (120) est plié vers le côté central dans la direction axiale à travers l'élément de verrouillage (220).
